# EUROPEAN PATENT APPLICATION

(11) **EP 1 110 470 A2**
(43) Date of publication of application: **27.06.2001**
(21) Application number: 00310838.8
(22) Date of filing: 06.12.2000
(51) Int. Cl.: A44C 5/00

(54) **Arm holder for an arm portable information device**

(30) Priority: 20.12.1999 JP 36170299
(71) Applicant: SEIKO INSTRUMENTS INC., Chiba-shi, Chiba 261 (JP)
(72) Inventor: Mitamura, Gen, Mihama-ku, Chiba-shi, Chiba (JP)
(74) Representative: Sturt, Clifford Mark

(57) **Abstract**

Arm holder pieces are separated in the form of a wedge at their coupling portion and coupled by a thin portion to constitute a hinge. A hard adjusting band one end of which is adhered or welded to the arm holder piece is projected toward the arm holder piece side on the coupling portion of the arm holder pieces. The other end of the hard adjusting band is fixed at a thread fastening portion of the arm holder piece. The hard adjusting band has a slide hole so as to be fastened at a free position by a thread. With this structure, the arm holder pieces are adjusted to an arbitrary angle and fixed thereat.

## Description

The present invention relates to a structure in which an arm holder of an arm portable information device is adapted to the configuration of a wrist.

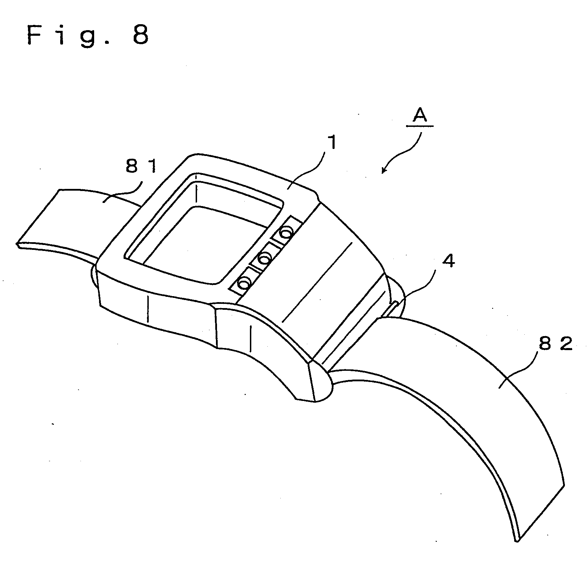

Fig. 8 is a perspective view showing an arm portable information device with an arm holder. As shown in the figure, an arm portable information device A includes two arm holders 81 and 82 made of a hard material and a main body 1. The arm holders 81 and 82 are rotatable about arm holder attachment shafts 4 disposed on end portions of the main body 1 as centers.

Also, both of those arm holders 81 and 82 are appropriately curved on the assumption of the very average configuration of wrists. When the arm portable information device A is attached onto a wrist, the main body 1 and the both the arm holders 81 and 82 which are appropriately curved nip the wrist due to the rotating operation. Note that the arm portable information device A with the arm holders 81 and 82 is described for convenience of description of the present invention, and is not construed to be known or used in public.

In the conventional device, because the hard arm holders 81, 82 and the main body 1 nip the wrist so that the arm portable information device A is attached onto the wrist, the attachment and detachment of the arm portable information device A to and from the wrist is simple. Also, since the arm portable information device A is capable of providing various functions such as not only a clock function, but also functions such as a cell phone or PHS (personal handyphone system) device or a GPS (global positioning system) function, the simpleness of the attachment and detachment is important for the execution of the above functions.

However, since the above two arm holders 81 and 82 are integrally molded with a hard material, respectively, it is difficult to adapt the arm holders 81 and 82 to the configurations of wrists of all persons such as old and young men and women. As described above, since the arm portable information device can have multi-functions or high-functions, it is desirable that the attachment and detachment of the arm holders are simplified in accordance with the functions and to adapt those arm holders to the configurations of wrists as much as possible.

The present invention has been made in view of the above circumstances, and therefore an object of the present invention is to provide an arm holder for an arm portable information device which is capable of being adapted to the configuration of wrists of a user of an arm portable information device's user without degrading the attaching and detaching simpleness which the arm holder per se has.

In order to achieve the above object, according to the present invention, an arm holder for an arm portable information device has a structure in which the arm holder is rotated about an arm holder attachment shaft disposed on a main body of the arm portable information device as its center, and the arm holder for the arm portable information device that nips the wrist by the main body of the arm portable information device and the arm holders, is adapted to a wrist configuration, and is characterized in that said arm holder is structured by coupling a plurality of arm holder pieces so that angles between the adjacent arm holder pieces can be adjusted, and said angles can be fixed after adjustment.

With a structure in which the arm holder is divided into a plurality of arm holder pieces and those arm holder pieces are coupled to each other, the arm holder is liable to be more adapted to the configuration of the user's wrist as a whole as the number of divided arm holder pieces become larger. In other words, since the configuration of the wrist is curve, it may be assumed that the curve approximates the connection of short straight lines. Accordingly, to adjust and fix the angles between the respective divided arm holder pieces means that the curve is approximated by short straight lines and the configuration of the curve is maintained.

The coupling structure may be made in such a manner that hinges each having a wedge-shaped notch is applied, and a wedge is inserted into each of the notches and fixed so that the angles between the adjacent arm holder pieces may be adjusted.

When a plurality of arm holder pieces are coupled to each other by the hinges each having the wedge-shaped notch, the arm holder pieces are rotatable, and the wedge can be inserted into each of the notches. The wedge pushes and widens the notch if the degree of insertion of the wedge is made deeper. Also, if the degree of insertion is made shallower, the angles between the arm holder pieces become small due to the elasticity of the hard material of which the arm holder is made.

The hinge is applied to the coupling structure, and the respective arm holder pieces that constitute both ends of the diffraction portion of the hinge are connected to each other, and an adjusting band disposed on one end may be fastened with another end by a thread.

With the application of the hinge at the coupling structure, the respective arm holder pieces that constitute the hinge can be rotated at the diffraction portion. Accordingly, the respective arm holder pieces have the freedom of an angle. Also, since the adjusting band disposed on one of the arm holder pieces is projected so as to mediate the hinge portion to another arm holder piece, another arm holder piece can be screwed. With this structure, an angle between the respective two arm holder pieces that constitute the hinge can be adjusted, and can be fixed.

Further, in the arm holder of the arm portable information device according to the present invention, the arm holder is rotated about the arm holder attachment shaft disposed on the main body of the arm portable information device as its center, and the arm holder of the arm portable information device that nips the wrist by the main body of the arm portable information device and the arm holders may be made of a shape memory material.

In addition, the arm holder of the portable information device may be coated with a flexible material.

Embodiments of the present invention will now be described by way of further example only and with reference to the accompanying drawings, in which:-
Fig. 1 is a perspective view showing a state in which an arm holder is attached to an arm portable information device in accordance with a first embodiment of the present invention;
Fig. 2 is an enlarged perspective view showing a state in which arm holder pieces are viewed from the-back side in accordance with the first embodiment of the present invention;
Fig. 3 is a perspective view showing a state in which hinge pieces are disposed or embedded in the arm holder in accordance with the first embodiment of the present invention;
Fig. 4 is a perspective view showing a reverse preventing mechanism at the time of adjusting the arm holder in accordance with the first embodiment of the present invention;
Fig. 5A and 5B are a perspective view showing an arm holder of an arm portable information device in accordance with a second embodiment of the present invention, and a cross-sectional view showing a notch peripheral portion;
Fig. 6A and 6B are a perspective view showing an arm holder of an arm portable information device in accordance with a third embodiment of the present invention, and a cross-sectional view showing a notch peripheral portion.
Fig. 7 is a perspective view showing an arm portable information device when the arm holder is made of a shape memory alloy; and
Fig. 8 is a perspective view showing an arm portable information device with a conventional arm holder.

Now, a description will be given in more detail of an arm holder for an arm portable information device in accordance with preferred embodiments of the present invention with reference to the accompanying drawings. It should be noted that the present invention is not limited to the following embodiments.

### (First Embodiment)

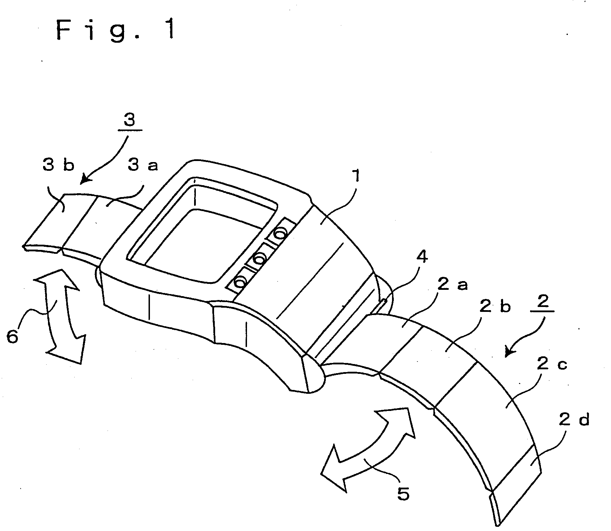

Fig. 1 is a perspective view showing a state in which an arm holder is attached onto an arm portable information device in accordance with a first embodiment of the present invention. Two arm holders 2 and 3 are attached to a main body 1 through attachment shafts 4 (only one side is shown). One arm holder 2 is divided into a plurality of pieces, in this example, four arm holder pieces 2a, 2b, 2c and 2d. Similarly, another arm holder 3 is also divided into two arm holder pieces 3a and 3b. The number of division of each of the arm holders 2 and 3 is appropriately selected in order to adapt the arm holders to the rigidness of the used material and the configuration of the user's wrist at optimum.

Accordingly, the number of divided arm holder pieces is not limited to the number shown in Fig. 1. The arm holders 2 and 3 are rotatable in directions indicated by arrows 5 and 6 and fixed at an appropriate angle by a ratchet mechanism disposed between each of the arm holder attachment shafts 4 and each of the arm holders 2 and 3 or an engaging mechanism (not shown). With this structure, when the main body 1 is attached onto the wrist, the arm holders 2 and 3 are rotated so as to surround the wrist, and the arm holders 2, 3 and the main body 1 nip the wrist.

As the present invention has a feature in that the arm holders 2 and 3 are adapted to the configuration of the wrists, the adaptive structure will be described hereinafter. Since the adaptive structure is common to those two arm holders 2 and 3, only the arm holder 2 will be described. Also, the adaptive structure is characterized by the coupling portions between the plural arm holder pieces 2a, 2b, 2c and 2d, resepctively, and the coupling portion is common to each of the pieces, and therefore the coupling portions 2b and 2c will be described as the representative.

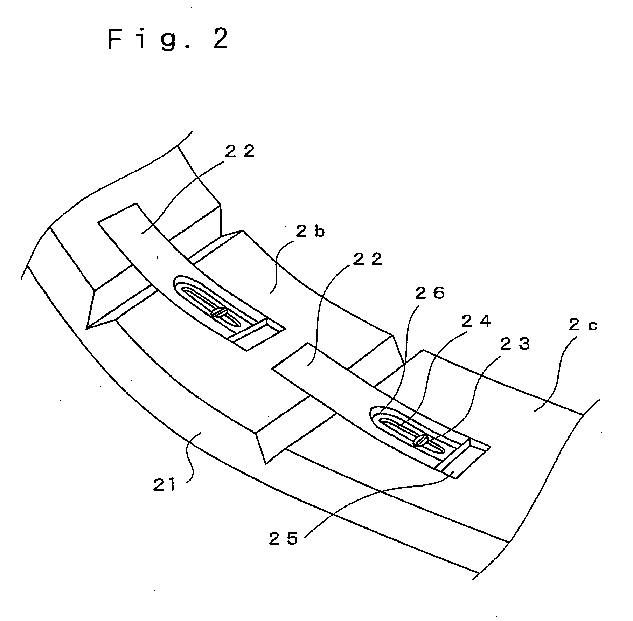

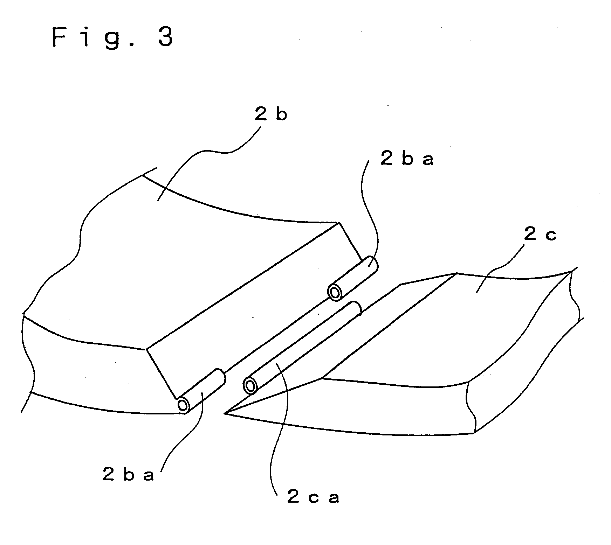

Fig. 2 is a perspective enlarged view showing the arm holder pieces 2b and 2c when being viewed from the back side. The arm holder pieces 2b and 2c are separated at their coupling portion in the form of a wedge and are coupled to each other at a thin portion 21 to constitute a hinge. Note that, as shown in Fig. 3, the coupling portion is formed by integrating hinges 2ba and 2ca with the arm holder pieces 2b and 2c, respectively. Alternatively, although being not shown, a plate having the hinges 2ba on an end portion thereof may be fixed to the arm holder piece 2b, a plate having the hinge piece 2ca on an end portion thereof may be fixed to the arm holder piece 2c. Returning to Fig. 2, a hard adjusting band 22 one end of which is adhered or welded to the arm holder piece 2b is projected toward the arm holder piece 2c side on the coupling portion of the arm holder pieces 2b and 2c.

Then, the other end of the hard adjusting band 22 is fixed to a thread fastening portion 23 of the arm holder piece 2c. The hard adjusting band 22 has a slide hole 24 so as to be fastened at a free position. With this structure, the arm holder pieces 2b and 2c can be adjusted at an arbitrary angle and can be fixed thereat. The arm holder pieces per se are made of a hard material for the purposes of the adjustment and fixation of the angle. However, in the case where a strange feeling when the hard material touches the wrist is taken into consideration, the arm holder pieces may be covered with a flexible material such as rubber, urethane or resin.

Note that the hard adjusting band 22 may be fastened to the arm holder 2b by a thread instead of adhesion or welding as described above. Also, if the hard adjusting band 22 floats on the rear side of the arm holder pieces 2b and 2c, since it may cause the strange feeling when the arm holders are attached to the wrist, a groove 25 that receives the hard adjusting band 22 therein is defined in the arm holder 2c.

Similarly, it is preferable that a groove 26 having a depth as large as the thickness of the thread head is defined in the periphery of the slide hole 24 of the hard adjusting band 22 so that a top surface of a thread head has the same level as the rear surface of the arm holder piece 2c. With this structure, the top surface of the hard adjusting band 22, the top surface of the thread head and the rear surface of the arm holder piece 2c have the same level so that the user of the arm portable information device does not have a strange feeling.

As described above, the user of the arm portable information device can adapt and fix the configuration of the arm holders 2 and 3 to the configuration of the user's wrist, thereby being capable of providing the attaching facility of the arm holders 2 and 3 per se and the excellent attaching property of the arm portable information device. Also, in the arm holder according to the first embodiment as described above, the adjustment of the angles between the divided arm holder pieces (2a, 2b, 2c, etc.) is facilitated by using the attaching and detaching facility of the arm holders 2 and 3 of the arm portable information device. That is, the thread fastening portion 23 of the arm holders 2 and 3 is made in a semi-fastening state, the arm holders 2 and 3 are rotated about the arm holder attaching shafts 4 of the main body 1 as their centers once, and the arm holders 2 and 3 are then attached onto the wrist.

Then, the respective arm holder pieces (2a, 2b, 2c, etc.) are pushed toward the wrist by another hand to which the arm holders 2 and 3 are not attached, whereby the position of the hard adjusting band 22 provided on the back side of each of the arm holders 2 and 3 is determined in the groove 25. Then, the entire arm holders 2 and 3 are rotated in a direction opposite to the direction along which the arm holders 2 and 3 are attached to the wrist about the arm holder attaching shafts 4 of the main body 1 as their center, and the arm holders 2 and 3 are detached from the wrist. In this situation, since the configuration of the wrist is transferred to the respective arm holder pieces (2a, 2b, 2c, etc.), the above semi-fastened thread may be completely fastened.

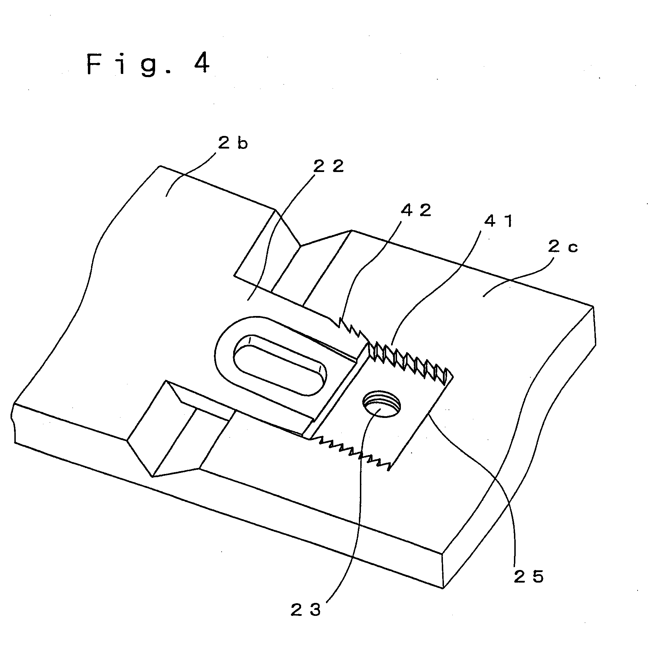

In this case, as shown in Fig. 4, if a serration is cut in both side walls 41 of the groove 25 on the back side of the arm holder piece (for example, 2c), and a sawtooth-shaped protrusion group 42 is formed on the tip portion of the hard adjusting band 22 disposed on the back side of the coupled arm holder pieces (for example, 2b), the angles between the respective arm holder pieces to which the configuration of the wrist has been once transferred become difficult to extremely change. In this state, if the thread is completely fastened into the thread fastening portion 23, the arm holder configuration to which the configuration of the wrist has been substantially completely transferred can be created.

### (Second Embodiment)

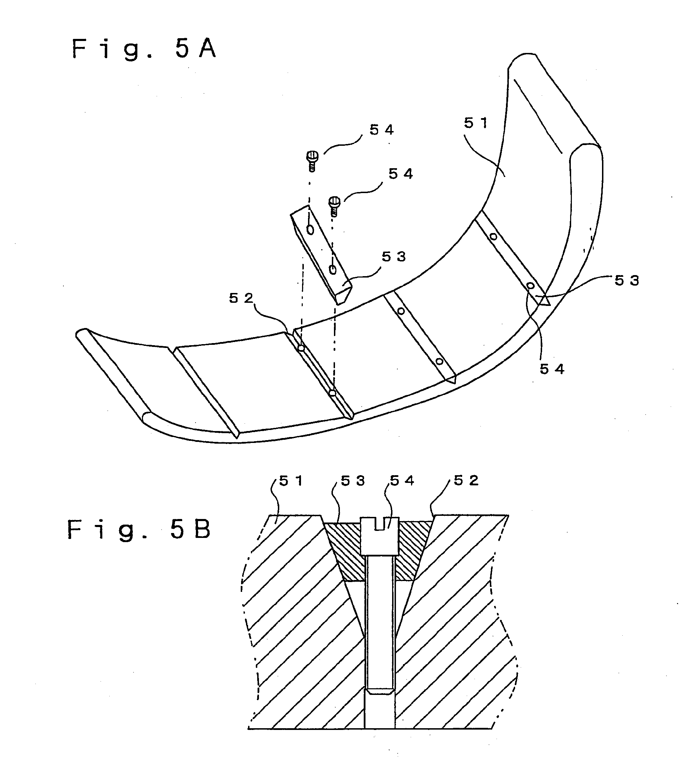

Fig. 5A is a perspective view showing an arm holder of an arm portable information device in accordance with a second embodiment of the present invention. The arm holder 51 is formed by making the curvature of the entire arm holder 51 which has not yet been deformed large so that the arm holder 51 can be attached onto even a small wrist of a child. Also, a plurality of wedge-shaped notches 52 are formed on a side of the arm holder 51 which is attached onto the wrist to constitute hinges. A sectionally trapezoidal wedge 53 is inserted into each of the wedge-shaped notches 52 and then fixed by a thread 54.

Note that, in the figure, each of the hinges is structured by a thin portion (not shown) remaining on each wedge-shaped notch. However, a hinged piece may be provided or integrated instead of the thin portion to constitute the hinge as in the first embodiment.

Also, the arm holder 51 is made of a hard material such as metal or resin because the attachment and detachment of the arm holder 51 are facilitated in accordance with the function of the arm portable information device and because the configuration of the arm holder 51 which has been deformed needs to be maintained. In the case where a user who attaches the arm holder to his wrist strangely feels the hard material, the hard material is coated with a flexible material such as urethane or rubber.

Subsequently, an operation of the arm holder 51 of the arm portable information device in accordance with the second embodiment will be described. Fig. 5B is an enlarged cross-sectional view showing the portion of the wedge-shaped notch 52. Since the wedge 53 is trapezoidal in section and inserted into the wedge-shaped (V-shaped) notch 52, the wedge-shaped notch 52 is opened by fastening the thread 54.

All of the plural notches 52 of the arm holder 51 are subjected to the above action, and the configuration of the entire arm holder 51 which is originally formed with a large curvature can be deformed to a small curvature. As a result, the arm holder 51 can be adapted to the wrist of the user who attaches the arm portable information device to his wrist. Note that, in the figure, the wedge 53 is pushed from a surface of the arm holder 51 which is in contact with the wrist (hereinafter referred to as "inner surface") by the thread 54. Conversely, however, the wedge 53 may be pulled from another surface of the arm holder 51 opposite to the surface which is in contact with the wrist (hereinafter referred to as "outer surface").

As described above, in the arm holder of the arm portable information device according to the second embodiment, similar to the arm holder of the arm portable information device according to the first embodiment, the user of the arm portable information device can adapt and fix the configuration of the arm holder 51 to the configuration of the user's wrist, thereby being capable of providing the attaching facility of the arm holder 51 per se and the excellent attaching property of the arm portable information device. Also, since the arm holder is small in the number of parts to be used, it is excellent in the costs.

Also, since the wedge 53 is completely received in the notch 52 and an area of the upper flat surface to the entire arm holder can be reduced, the user who attaches the arm portable information device to his wrist does not have a strange feeling. In addition, if the hard material is coated with a flexible material, not only the user does not have a strange feeling when the user attaches the arm portable information device to his wrist, but also the attachment feeling can be improved.

### (Third Embodiment)

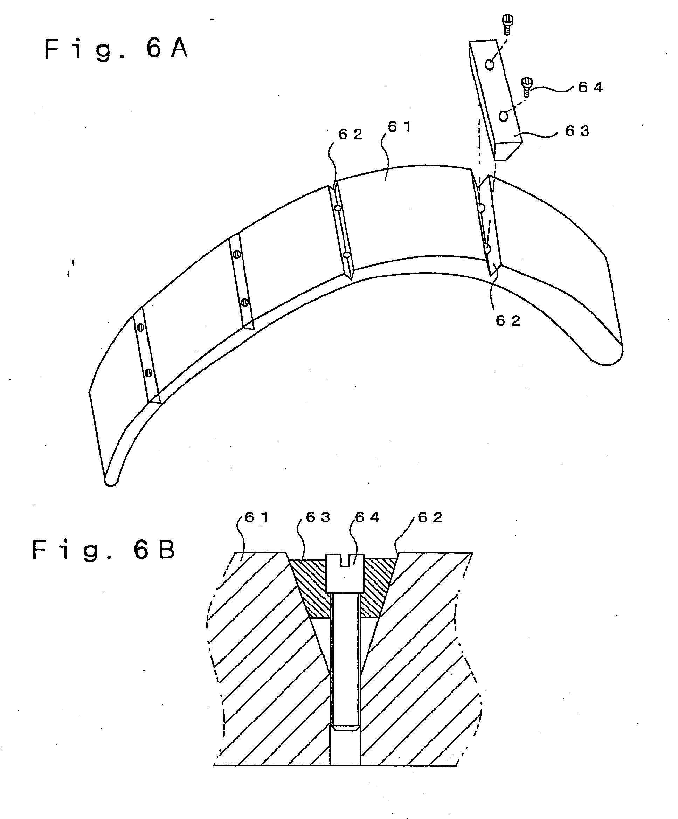

Fig. 6A is a perspective view showing an arm holder of an arm portable information device in accordance with a third embodiment of the present invention. An arm holder 61 is formed by making the curvature of the entire arm holder 61 which has not yet been deformed, small unlike the arm holder of the second embodiment of the present invention. Also, a plurality of wedge-shaped notches 62 are formed on an outer surface of the arm holder 61. A wedge 63 is inserted into each of the wedge-shaped notches 62 and then fixed by a thread 64.

Note that, in the figure, each of the hinges is structured by a thin portion (not shown) remaining on each wedge-shaped notch. However, a hinged piece may be provided or integrated instead of the thin portion to constitute the hinge as in the first and second embodiments. Also, the arm holder 61 is made of a hard material such as metal or resin. However, in the case where a user strangely feels the hard material, the hard material is coated with a flexible material such as urethane or rubber as in the first and second embodiments.

Subsequently, an operation of the arm holder 61 of the arm portable information device in accordance with the third embodiment will be described. Fig. 6B is an enlarged cross-sectional view showing the portion of the wedge-shaped notch 62. Since the wedge 63 is trapezoidal in section and inserted into the wedge-shaped (V-shaped) notch 62, the wedge-shaped notch 62 is pushed and opened by fastening the thread 64.

All of the plural notches 62 of the arm holder 61 are subjected to the above action, and the configuration of the entire arm holder 61 which is originally formed with a small curvature can be deformed in a large curvature. As a result, the arm holder 61 can be adapted to the wrists of all the users who attach the arm portable information device to their wrists. Note that, in the figure, the wedge 63 is fastened from an outer surface of the arm holder 61 by the thread 64. Conversely, however, the wedge 63 may be pulled from an inner surface of the arm holder 61.

As described above, in the arm holder of the arm portable information device according to the third embodiment, simiar to the arm holders of the arm portable information device according to the first and second embodiment, the user of the arm portable information device can adapt and fix the configuration of the arm holder 61 to the configuration of the user's wrist, thereby being capable of providing the attaching facility of the arm holder 61 per se and the excellent attaching property of the arm portable information device. Also, since the number of parts to be used can be reduced, the costs can be suppressed to the low costs.

Also, since the wedge 63 is completely received in the notch 62 and an area of the upper flat surface to the entire arm holder can be reduced, the user who attaches the arm holder 61 to his wrist does not have a strange feeling. In addition, if the hard material is coated with a flexible material, not only the user does not have a strange feeling when the user attaches the arm portable information device to his wrist, but also the attachment feeling can be improved.

Still further, the arm holder is bent at a side which is in contact with the wrist if an external force is applied from the external of the wrist after the configuration of the arm holder has been adjusted and fixed by the thread 64 once, but is not bent at an opposite side. Therefore, even if some external force is applied from the external, the arm holder can absorb the external force together with the wrist's muscle, and the arm holder can be prevented from falling down.

### (Fourth Embodiment)

In an arm holder of the arm portable information device in accordance with a fourth embodiment of the present invention, the material per se of the arm holder or the core material of the arm holder is made of a shape memory material. The shape memory material to be used is a shape memory alloy such as a Ti-Ni alloy or a Cu-Zn-Al alloy, or a shape memory resin such as a shape memory plastic. First, before a description of the adaptive structure of the arm holder of the arm portable information device to the wrist configuration in accordance with the fourth embodiment, the basic operating principle of the shape memory alloy among the shape memory material will be described. The same basic operating principle may be applied to the shape memory resin.

The shape memory alloy is directed to intermetallic compound that combines specific element, which is an alloy that produces martensite transformation or reverse martensite transformation depending on temperature. The shape memory alloy has a property that when the shape memory alloy is subjected to the reverse martensite transformation while a temperature goes up after it has been deformed in the martensite state as in the general metal, the shape memory alloy returns to a configuration which is originally memorized by the metal. A temperature at which the configuration starts to return to the original is called "transformation point" which can be set to about 1 to 100°C in accordance with the component of the alloy.

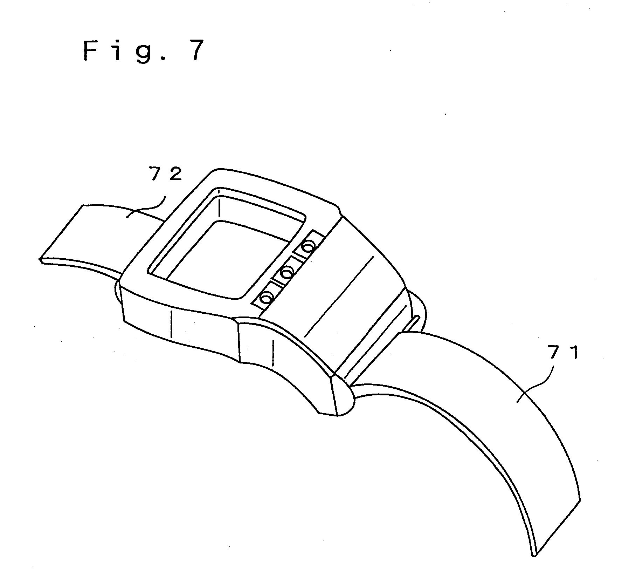

Subsequently, a description will be given of the adaptive structure of the arm holder made of the shape memory alloy of the arm portable information device to the wrist configuration in accordance with the fourth embodiment. Fig. 7 is a perspective view showing the arm portable information device when the arm holder is made of the shape memory alloy. The arm holder is not apparently different from the conventional arm holder (Fig. 8). However, because the arm holders 71 and 72 are made of the shape memory alloy as described above, they return to the configuration which is originally memorized by the arm holders 71 and 72 when the temperature exceeds a given transformation point (temperature). That is, the deformation is enabled when the temperature is equal to or lower than the transportation point as in the general metal.

From the above fact, if the arm holders 71 and 72 are attached onto the wrist of the user of the arm portable information device and the arm holders 71 and 72 are pushed toward the wrist when the temperature is equal to or lower than the transportation point, the configuration of the wrist can be transferred onto the arm holders 71 and 72. The arm holders 71 and 72 to which the wrist configuration has been transferred once, do not need to be adjusted in configuration so far as they have been deformed for some cause. However, if the arm holders 71 and 72 have been deformed for some cause, the arm holders 71 and 72 may be again pushed toward the wrist if the deformation is slight.

If the arm holders 71 and 72 have been largely deformed, after the arm holders 71 and 72 are immersed into water of the transportation point, for example, about 42°C once, and the arm holders 71 and 72 return to the configuration memorized by the alloy as the original configuration, for example, a flat configuration, the temperature goes down, and the wrist configuration is re-transferred to the arm holders 71 and 72. If the weight of the arm holders 71 and 72 is intended to be reduced, all the portions of the arm holders 71 and 72 are not made of the shape memory alloy, but the arm holders 71 and 72 are coated with a flexible material such as urethane raw material or rubber which feel soft, and the shape memory alloy may be embedded into only the core portion thereof.

The above description is applied to a case in which the shape memory alloy is employed for the arm holders 71 and 72. However, even if the shape memory resin is employed, it may be used as the arm holders 71, 72 or their core material with the transportation point being about 40°C.

As was described above, in the arm holder of the arm portable information device according to the present invention, the arm holder pieces can be adjusted at an arbitrary angle and can be fixed thereat. With this structure, the user of the arm portable information device can adapt and fix the configuration of the arm holder to the configuration of the user's wrist, thereby being capable of providing the attaching facility of the arm holder per se and the excellent attaching property of the arm portable information device.

Also, in the arm holder of the arm portable information device according to the present invention, the user of the arm portable information device can adapt and fix the configuration of the arm holder to the configuration of the user's wrist, thereby being capable of providing the attaching facility of the arm holder per se and the excellent attaching property of the arm portable information device. Also, since the number of parts to be used can be reduced, the arm holder is excellent in the costs.

Further, in the arm holder of the arm portable information device according to the present invention, there can be provided the excellent attaching property of the arm portable information device. Also, at the thread portion of the adjusting band, the thread is semi-fastened, and the arm holder is pushed toward the wrist, to thereby determine the position of the hard adjusting band provided on the back side of each of the arm holders in the groove. Then, in this state, if the entire arm holders are rotated about the arm holder attaching shafts of the main body as their center, the arm holders are detached from the wrist, and the thread is completely fastened, the wrist configuration can be transferred onto a plurality of arm holder pieces at stepless.

Still further, in the arm holder of the arm portable information device according to the present invention, since the entire arm holder or the core portion is made of a shape memory material such as a shape memory alloy or a shape memory resin, the arm holder can be adapted to the wrist configuration at a normal use temperature easily and at stepless. Also, for example, even if another person used the arm portable information device, if the temperature of the arm holder goes up so that it passes through the transportation point once, and the arm holder is returned to the original configuration (for example, flat configuration) of the shape memory alloy, etc., and the temperature then goes down, the configuration of the arm holder can be again easily adapted to the wrist configuration of another person.

Yet still further, in the arm holder of the arm portable information device according to the present invention, because the arm holder or the arm holder pieces which are made of a hard material is coated with a flexible material such as resins such as urethane raw material or plastic, the arm holder is liable to be fitted to the skin of the wrist without degrading the adaptive function of the arm holder to the wrist, thereby being capable of suppressing the tight feeling or the strange feeling.

## Claims

1. An arm holder for an arm portable information device comprising:
a arm holder comprising a plurality of arm holder pieces to be adapted to a wrist configuration so that angles between the arm holder pieces can be adjusted, and the angles can be fixed after adjustment; and
means for rotatably attaching the arm holder to an arm portable information device.

2. An arm holder for an arm portable information device as claimed in claim 1, wherein the arm holder has a hinge with a wedge-shaped notch; and
a wedge is inserted into the notch to fix the arm holder pieces so that the angles between adjacent arm holder pieces can be adjusted.

3. An arm holder for an arm portable information device as claimed in claim 1, wherein the arm holder has a hinge; and
the respective arm holder pieces that constitute both ends of the diffraction portion of the hinge are connected to each other, and an adjusting band disposed on one end is engaged with another end.

4. An arm holder for an arm portable information device comprising:
an arm holder made of a shape memory material to be adapted to a wrist configuration; and
means for rotatably attaching the arm holder to an arm portable information device.

5. An arm holder for an arm portable information device as claimed in claim 1, wherein the arm holder is coated with a flexible material.

6. An arm holder for an arm portable information device as claimed in claim 2, wherein the arm holder is coated with a flexible material.

7. An arm holder for an arm portable information device as claimed in claim 3, wherein the arm holder is coated with a flexible material.
